# DEMANDE DE BREVET EUROPEEN

(11) **EP 1 431 108 A1**
(43) Date de publication de la demande: **23.06.2004**
(21) Numéro de dépôt: 03293193.3
(22) Date de dépôt: 17.12.2003
(51) Int. Cl.: B60N 2/46, B60R 7/04

(54) **Couvercle pivotant et coulissant pour rangement de véhicule automobile et rangement correspondant**

(30) Priorité: 17.12.2002 FR 0215981
(71) Demandeur: Renault s.a.s., 92100 Boulogne Billancourt (FR)
(72) Inventeur: Bailly, Thierry, 78760 Jouars Pontchartrain (FR); Quevilly, Eric, 78370 Plaisir (FR)

(57) **Abrégé**

L'invention concerne un couvercle (14) pour rangement (10) de véhicule automobile apte à obturer une ouverture (16) dudit rangement, ledit couvercle étant mobile en rotation, autour d'un axe (15), et en translation, par l'intermédiaire d'un moyen de coulissement, caractérisé en ce que le moyen de coulissement est apte à permettre une translation du couvercle (14) d'une position d'obturation vers une position autorisant la rotation dudit couvercle (14) vers une position ouverte stable.

## Description

L'invention concerne un couvercle pivotant coulissant pour rangement de véhicule automobile et un rangement comportant un tel couvercle.

De tels couvercles sont notamment utilisés pour des rangements comportant un bac situé dans une console centrale d'un véhicule, par exemple entre les sièges avant.

En général, les couvercles connus servent également d'accoudoir pour l'un des passagers, et l'accès au contenu du bac est autorisé par la rotation du couvercle autour d'un axe situé sur un bord du bac. En raison du peu de place entre les sièges, ces bacs de rangement sont souvent sensiblement rectangulaires, le couvercle pivotant autour d'un axe disposé sur un petit côté du bac. Toutefois, ces rangements ne prévoient pas de blocage du couvercle lorsque ce dernier est en position sensiblement verticale, de sorte que le passager doit tenir le couvercle d'une main pour éviter qu'il ne retombe pendant qu'il se sert dans le bac de rangement. La position verticale du couvercle n'étant pas stable, il n'est pas possible de maintenir le couvercle dans cette position lors de la conduite du véhicule afin d'avoir accès au contenu du bac de rangement.

Le document US 2002/0089217 décrit un compartiment dont l'ouverture est fermée par un accoudoir et accessible par rotation de l'accoudoir autour d'un axe disposé sur un bord du compartiment. L'accoudoir lui-même est composé de deux parties. Une partie forme un rangement accessible par coulissement de la seconde partie. Toutefois, ce document ne décrit pas non plus de dispositif permettant de maintenir l'accoudoir en position ouverte pour un accès permanent au compartiment lui-même.

L'invention vise à pallier à ces inconvénients en proposant un couvercle de rangement pivotant coulissant permettant à la fois la rotation et le coulissement du couvercle, de sorte que ce dernier peut obturer plus ou moins partiellement l'ouverture d'un rangement ou rester en position sensiblement verticale sans avoir besoin d'être tenu par le passager.

A cet effet, un premier objet de l'invention concerne un couvercle pour rangement de véhicule automobile apte à obturer une ouverture dudit rangement, ledit couvercle étant mobile en rotation autour d'un axe, et en translation, par l'intermédiaire d'un moyen de coulissement, le moyen de coulissement étant apte à permettre une translation du couvercle d'une position d'obturation vers une position autorisant la rotation dudit couvercle vers une position ouverte stable.

Dans une variante l'axe de rotation est disposé sur un bord du rangement. La face inférieure dudit couvercle, destinée à couvrir l'ouverture, comprend des moyens de liaison avec ledit axe de rotation aptes à permettre la rotation du couvercle et/ou le déplacement de ce dernier en translation suivant une direction sensiblement perpendiculaire à l'axe de rotation, quelque soit l'inclinaison du couvercle. Il est ainsi possible d'ouvrir partiellement l'ouverture en faisant coulisser le couvercle : une partie seulement du rangement est accessible. De plus, en position verticale, il suffit de faire coulisser le couvercle vers le bas jusqu'à ce que son centre de gravité soit suffisamment bas pour que le couvercle soit stable dans cette position.

Dans une variante, lesdits moyens de liaison comportent des moyens de blocage aptes à bloquer le couvercle en différentes positions au cours de sa translation et/ou à limiter son déplacement en translation. Il est alors possible de maintenir le couvercle dans des positions fermée et partiellement fermée prédéterminées, ou en position verticale.

Dans un mode de réalisation particulier, les moyens de liaison comprennent au moins une glissière fixe solidaire de la face inférieure du couvercle et au moins un élément de liaison mobile respectif guidé en translation dans ladite glissière, ledit élément de liaison étant relié audit axe de rotation. L'élément de liaison est par exemple un coulisseau, dont une extrémité est reliée audit axe de rotation. Cette réalisation présente l'avantage d'être simple et résistante à la fois. De plus, un tel couvercle peut être facilement adapté sur des rangements existants, l'axe de rotation existant est alors relié directement à l'élément de liaison et non plus au couvercle.

Dans une variante, la face supérieure du couvercle forme un accoudoir. La fonction d'accoudoir peut alors être conservée lorsque le couvercle est partiellement fermé.

Un autre objet de l'invention concerne un rangement de véhicule automobile comprenant un bac de rangement présentant une ouverture et un couvercle tel que décrit précédemment, l'axe de rotation étant fixé sur un bord de l'ouverture et le couvercle étant suffisamment éloigné de l'axe de rotation pour pouvoir coulisser dans une position sensiblement verticale.

Dans un autre mode de réalisation, l'axe de rotation est solidaire de la face inférieure du couvercle et disposé à distance des extrémités du couvercle, ledit moyen de coulissement étant solidaire des bords de l'ouverture et coopérant avec ledit axe. Notamment, les moyens de coulissement peuvent être des glissières fixées sur les bords de l'ouverture coopérant avec les extrémités de l'axe de rotation. Il n'est alors possible de faire basculer le couvercle que lorsque l'axe de rotation est en fin de course de la glissière.

Dans une variante, le bac comprend des moyens de support et/ou de branchement situés à proximité d'un bord de l'ouverture. Ces moyens sont alors accessibles lorsque le couvercle est partiellement fermé. Cet arrangement permet de conserver la fonction d'accoudoir du couvercle tout en ayant accès à une partie du bac de rangement.

Dans une variante, le bac de rangement présente des moyens de blocage dudit couvercle coopérant avec des moyens de blocage complémentaires du couvercle et aptes à bloquer ce dernier dans une ou plusieurs positions. Dans une variante, lesdits moyens de blocage sont aptes à maintenir le couvercle dans une position fermée où il obture complètement l'ouverture et/ou dans au moins une position partiellement fermée où il obture partiellement l'ouverture. Dans une autre variante, ces moyens de blocage sont aptes à maintenir le couvercle dans une position sensiblement verticale. Ils permettent de stabiliser le couvercle et d'éviter qu'il ne bouge sous l'effet des vibrations du véhicule ou de mouvements brusques de ce dernier. De préférence, des moyens ne nécessitant pas une force élevée pour le blocage et le déblocage sont utilisés, tels que par exemple des aimants, afin de faciliter la manipulation du couvercle.

L'invention concerne également un véhicule automobile comportant au moins un rangement tel que décrit précédemment.

L'invention est maintenant décrite en référence aux dessins annexés, non limitatifs, dans lesquels :
- la figure 1 est une vue en perspective d'un mode de réalisation d'un rangement selon l'invention ;
- la figure 2 est une représentation schématique en coupe d'un rangement, le couvercle étant en position fermée,
- la figure 3 est une représentation schématique en coupe d'un rangement, le couvercle étant en position partiellement fermée,
- la figure 4 est une représentation schématique en coupe d'un rangement, le couvercle étant légèrement incliné,
- la figure 5 est une représentation schématique en coupe d'un rangement, le couvercle étant en position sensiblement verticale stable,
- la figure 6 est une représentation schématique en coupe d'un rangement, le couvercle étant en position sensiblement verticale instable.

Un mode de réalisation particulier d'un rangement 10 selon l'invention est décrit en référence aux figures. Ce rangement est disposé dans un véhicule automobile (non représenté), entre les sièges avant (non représentés).

Le rangement 10 comporte un bac de rangement 12 et un couvercle 14. Ce dernier permet de fermer plus ou moins partiellement une ouverture 16 formée sur la partie supérieure du bac 12. Le couvercle 14 est mobile en rotation par rapport à un axe de rotation 15 disposé sur un bord de l'ouverture du bac de rangement.

Dans le mode de réalisation représenté, le bac de rangement 12 et l'ouverture 16 présentent une forme sensiblement rectangulaire, leur direction longitudinale s'étendant suivant la direction longitudinale du véhicule.

Le bac de rangement 12 présente deux parois latérales longitudinales sensiblement parallèles 17 et 18 et deux parois d'extrémité 19, 20 solidaires des parois latérales. Les parois 17, 18, 19, 20 sont solidaires d'un fond 21. Les bords supérieurs 17', 18' des parois latérales et 19', 20' des parois d'extrémité respectivement forment les bords de l'ouverture 16.

Le couvercle 14 présente une face supérieure 22 et une face inférieure 24. La face supérieure 22 forme un accoudoir. Elle est par exemple recouverte d'une garniture en mousse pour un repos confortable de l'avant bras. Le moyen de coulissement du couvercle comprend des moyens de liaison 26 avec le bac de rangement permettant à la fois la rotation et le coulissement du couvercle par rapport au bac de rangement. Ces moyens de liaison sont disposés sur la face inférieure 24.

Ces moyens de liaison 26 comprennent une glissière 28 et un coulisseau 30 guidé en translation dans celle-ci. La glissière 28 est solidaire de la face inférieure 24 du couvercle, elle peut être réalisée d'une pièce avec la face inférieure ou bien fixée à celle-ci. Elle s'étend suivant la direction longitudinale du couvercle, sensiblement parallèlement aux bords de l'ouverture afin de permettre le coulissement du couvercle suivant la direction longitudinale du bac de rangement. La glissière 28 s'étend sensiblement sur toute la longueur du couvercle. De préférence, elle comporte des butées 29 à ses extrémités afin d'éviter que le coulisseau ne sorte de la glissière. Une extrémité du coulisseau 30 est reliée rigidement à la partie centrale de l'axe de rotation 15 de sorte que ce dernier soit sensiblement perpendiculaire à la direction longitudinale du coulisseau. L'axe de rotation 15 est lui-même monté à rotation sur le bac de rangement.

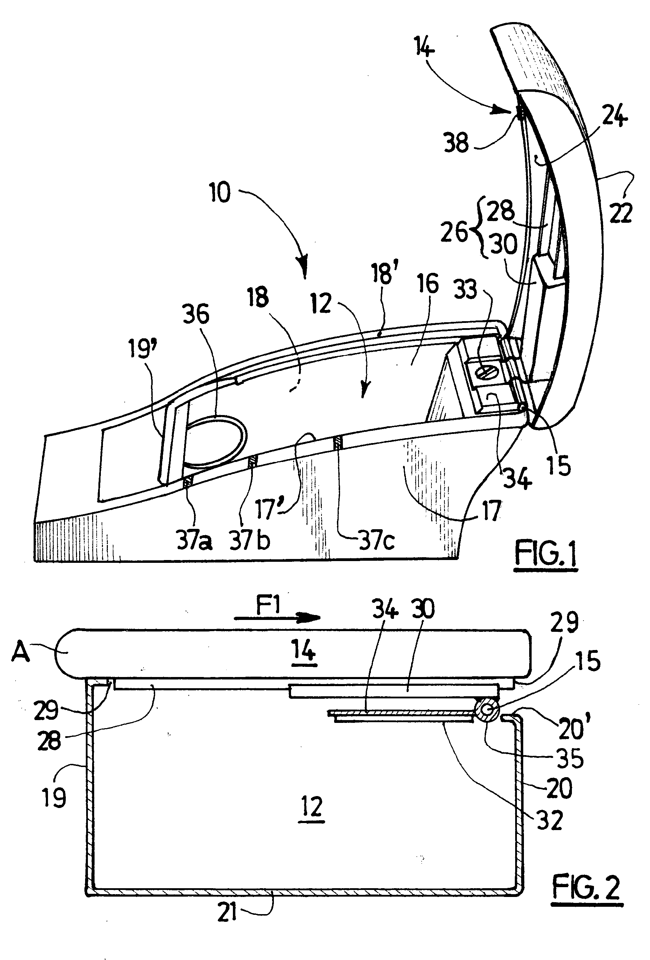

A cet effet, le bord 20' de la paroi d'extrémité 20 du bac, dirigée vers l'arrière du véhicule, présente un rebord 32 s'étendant sensiblement parallèlement au plan de l'ouverture 16 vers l'intérieur du bac 12. Une plaque 34 est fixée sur le rebord 32, par exemple au moyen de vis 33 (figure 1). Cette plaque 34 présente à son extrémité, du côté du bord 20', un manchon 35 apte à recevoir les extrémités de l'axe 15, de part et d'autre de la liaison avec le coulisseau 30. L'axe de rotation 15 est ainsi monté à rotation sur le bord 20', sensiblement perpendiculairement à la direction longitudinale du bac de rangement et à la direction de coulissement du couvercle. Ainsi, le coulisseau 30 est monté à rotation sur le bord 20' de l'ouverture, et le couvercle est relié au coulisseau au moyen d'une liaison glissière.

La glissière 28 est suffisamment longue pour que le couvercle 14 ferme complètement l'ouverture 16 (figure 2).

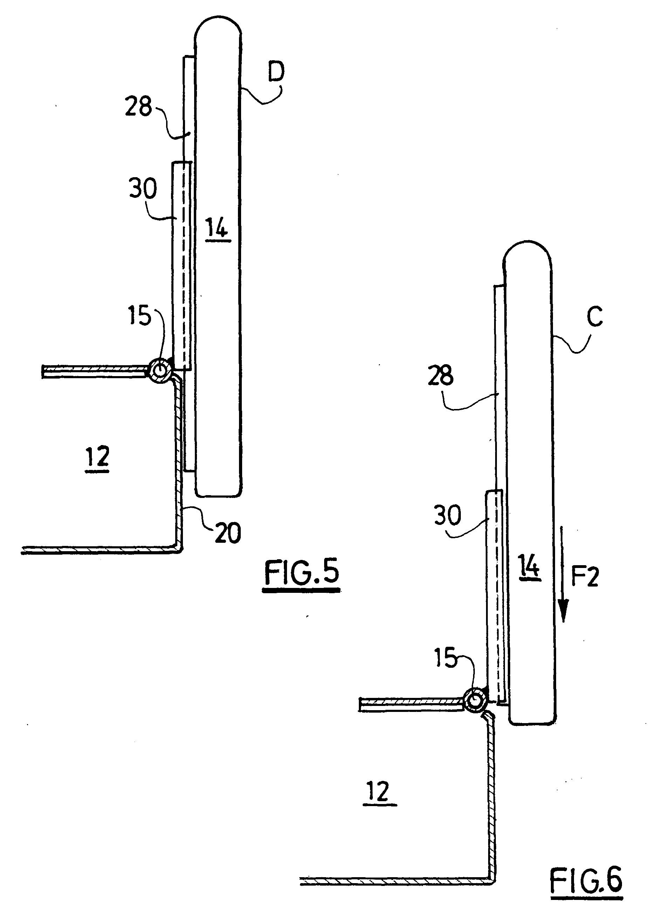

Afin de permettre au couvercle 14 de coulisser dans une position sensiblement verticale telle que représentée sur les figures 5 et 6, l'axe de rotation 15 est de préférence fixé à proximité du bord 20' de la paroi latérale 20 le long de laquelle le couvercle 14 va coulisser en position sensiblement verticale. Lorsque le couvercle 14 est dans cette position, la liaison entre le coulisseau 30 et l'axe de rotation 15 est telle que le couvercle peut aisément coulisser le long de la paroi 20 du bac.

Les différents mouvements possibles du couvercle sont décrits ci-après.

Lorsque le couvercle est en position fermée A, tel que représenté figure 2, il est alors possible de le faire coulisser vers l'axe de rotation 15 et la paroi 20 du bac en direction de la flèche F1 jusqu'à une position B partiellement fermée (figure 2). Ce mouvement permet d'accéder à la partie du bac de rangement à proximité de la paroi d'extrémité 19 opposée à l'axe de rotation 15, tout en conservant la fonction accoudoir du couvercle. Sur cette paroi 19, on peut prévoir des moyens de support et/ou de branchement 36, par exemple pour une cannette de boisson ou un dispositif de branchement électrique d'un téléphone. Ces moyens sont disposés à proximité de l'ouverture 16 et donc aisément accessibles lorsque le couvercle 14 est partiellement fermé.

A partir de la position fermée A, il est également possible de faire basculer le couvercle autour de l'axe de rotation 15, par exemple jusqu'à la position sensiblement verticale C représentée figure 6. Le coulisseau 30 est alors situé à une extrémité de la glissière 28. A partir de cette position C, on peut faire coulisser le couvercle de haut en bas suivant la flèche F2 en déplaçant le coulisseau en direction de l'autre extrémité de la glissière jusqu'à une position D, représentée sur la figure 5. Une partie du couvercle est alors située sensiblement en regard de la paroi 20 du bac de rangement et peut prendre appui sur celle-ci, de sorte que le couvercle ne peut basculer plus vers l'arrière du véhicule. De plus, l'axe de rotation 15 étant alors situé sensiblement au tiers ou à la moitié de la longueur du couvercle, le centre de gravité de ce dernier est abaissé de sorte que la position verticale D du couvercle est stabilisée.

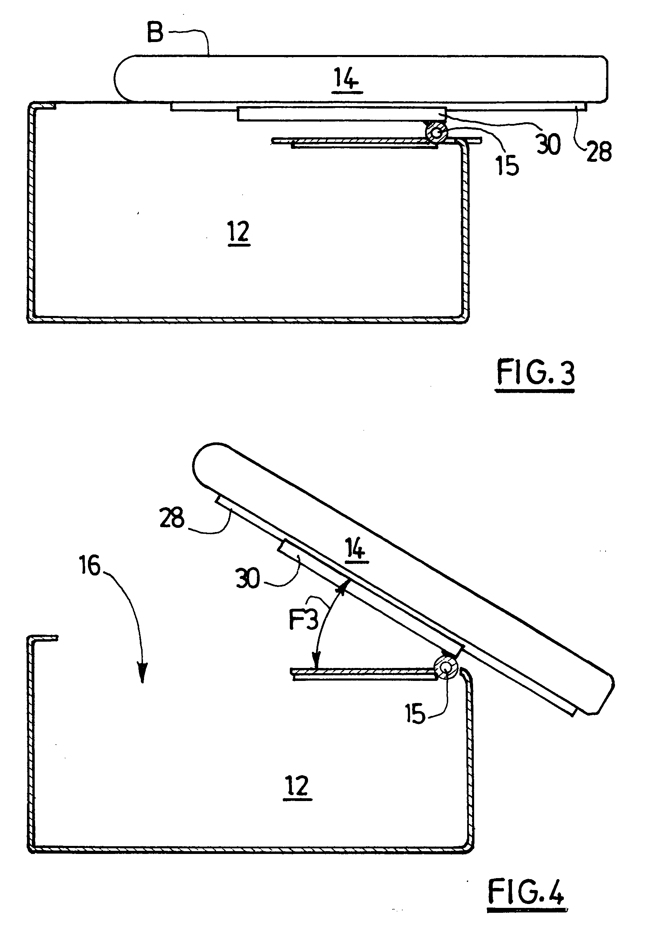

A partir de la position partiellement fermée B du couvercle, il est également possible de faire basculer le couvercle autour de l'axe de rotation 15, tel qu'indiqué par la flèche F3 sur la figure 4, de façon à accéder rapidement à la totalité du bac de rangement ou à placer le couvercle en position verticale D.

Le couvercle 14 peut ainsi être aisément déplacé d'une main entre les différentes positions A, B, C, D, et toutes les positions intermédiaires, et il peut être placé dans la position verticale D et être lâché sans risque de retomber violemment sur l'ouverture 16.

En utilisant une glissière 28 et un coulisseau 30 glissant parfaitement l'un par rapport à l'autre (par exemple avec une glissière à billes), le propre poids du couvercle provoque son coulissement en position verticale, jusqu'à ce que le coulisseau soit en bout de la glissière. On peut envisager de lester l'extrémité du couvercle dirigée vers le sol en position verticale D afin de favoriser la stabilité du couvercle dans cette position. On peut prévoir un dispositif de blocage entre la paroi 20 et la face inférieure 24 du couvercle, tel que par exemple des aimants ou similaires.

Des aimants 37a, 37b, 37c sont par exemple répartis sur un bord 17' du rangement et un aimant 38 est fixé à l'extrémité avant du couvercle (figure 1) sur la face inférieure 24, de sorte que l'aimant du couvercle puisse être mis en regard avec les différents aimants du bord par coulissement du couvercle. Le couvercle est en position fermée lorsque l'aimant 38 est en regard avec l'aimant 37a, et occupe des positions partiellement fermées lorsque l'aimant 38 est en regard avec les aimants 37b et 37c. Bien entendu, une autre série d'aimants peut être disposée sur l'autre bord 18' du rangement et un autre aimant sur le couvercle de manière similaire, afin d'améliorer la stabilité du couvercle.

On peut également prévoir des moyens de blocage (non représentés) afin d'indexer différentes positions du coulisseau par rapport à la glissière. Il peut s'agir, par exemple, d'un ressort fixé sur le coulisseau et venant en prise avec des crans disposés sur la glissière en des positions prédéterminées correspondant à des positions d'ouverture souhaitées du couvercle.

Bien sûr, d'autres modes de réalisation de ces différents moyens de blocage peuvent être utilisés.

On peut également prévoir des moyens de verrouillage usuels du couvercle en position fermée.

D'autres modes de réalisation non représentés peuvent être envisagés sans sortir du cadre de l'invention. Par exemple, l'axe de rotation peut être solidaire du bord 20' du rangement et être logé dans un manchon fixé au coulisseau.

D'autres types de liaison glissière entre le couvercle et l'axe peuvent être envisagés. Par exemple, deux glissières peuvent être prévues de part et d'autre du couvercle, coopérant chacune avec un coulisseau ou similaire. A la place d'un coulisseau, on peut envisager que l'axe soit relié à une ou des glissière(s) ou rail(s) par un ou plusieurs galet(s) ou patin(s).

Dans un autre mode de réalisation non représenté, l'axe de rotation 15 est solidaire de la face inférieure 24 du couvercle, à distance des extrémités de ce dernier. L'axe est par exemple disposé à proximité de la partie médiane du couvercle. Le moyen de coulissement est alors disposé sur le bac de rangement et par exemple sur les bords latéraux 17', 18' de son ouverture. Ce moyen peut consister en des glissières ou similaires fixées sur les bords et coopérant avec les extrémités de l'axe de rotation 15. On peut prévoir des galets aux extrémités de l'axe pour favoriser le coulissement. Il n'est alors possible de faire basculer le couvercle de la position horizontale à une position verticale stable, que lorsque l'axe de rotation est en fin de course des glissières.

Bien entendu, le rangement selon l'invention peut occuper une autre place dans le véhicule. On peut par ailleurs envisager que l'axe de rotation du couvercle soit situé sur le bord d'une paroi latérale d'extrémité.

## Revendications

1. Couvercle (14) pour rangement (10) de véhicule automobile apte à obturer une ouverture (16) dudit rangement, ledit couvercle étant mobile en rotation, autour d'un axe (15), et en translation, par l'intermédiaire d'un moyen de coulissement, **caractérisé en ce que** le moyen de coulissement est apte à permettre une translation du couvercle (14) d'une position d'obturation vers une position autorisant la rotation dudit couvercle (14) vers une position ouverte stable.

2. Couvercle (14) selon la revendication 1, l'axe de rotation (15) étant disposé sur un bord de l'ouverture du rangement, **caractérisé en ce que** le moyen de coulissement est disposé sur la face inférieure (24) dudit couvercle, destinée à couvrir l'ouverture (16), et comprend des moyens de liaison (26) avec ledit axe de rotation apte à permettre la rotation du couvercle et/ou le déplacement de ce dernier en translation suivant une direction sensiblement perpendiculaire à l'axe de rotation (15), quelle que soit l'inclinaison du couvercle.

3. Couvercle selon la revendication 2, **caractérisé en ce que** lesdits moyens de liaison (26) comportent des moyens de blocage aptes à bloquer le couvercle en différentes positions au cours de sa translation et/ ou à limiter son déplacement en translation.

4. Couvercle selon l'une des revendications 2 ou 3, **caractérisé en ce que** les moyens de liaison (26) comprennent au moins une glissière (28) fixe solidaire de la face inférieure (24) du couvercle et au moins un élément de liaison mobile (30) respectif guidé en translation dans ladite glissière, ledit élément de liaison (30) étant relié audit axe de rotation (15).

5. Couvercle selon la revendication 4, **caractérisé en ce que** l'élément de liaison (30) est un coulisseau, une extrémité de ce dernier étant reliée audit axe de rotation (15).

6. Couvercle selon l'une des revendications précédentes, **caractérisé en ce que** sa face supérieure (22) forme un accoudoir.

7. Rangement (10) de véhicule automobile comprenant un bac de rangement (12) présentant une ouverture (16) et un couvercle (14) selon l'une des revendications 2 à 6, **caractérisé en ce que** l'axe de rotation (15) est fixé sur un bord (20') de l'ouverture, et **en ce que** le couvercle (14) est suffisamment éloigné de l'axe de rotation (15) pour pouvoir coulisser dans une position sensiblement verticale.

8. Rangement (10) de véhicule automobile comprenant un bac de rangement (12) présentant une ouverture (16) et un couvercle selon la revendication 1, **caractérisé en ce que** l'axe de rotation (15) est solidaire de la face inférieure (24) du couvercle et disposé à distance des extrémités du couvercle, ledit moyen de coulissement étant solidaire des bords de l'ouverture du couvercle et coopérant avec ledit axe.

9. Rangement selon la revendication 8, **caractérisé en ce que** les moyens de coulissement sont des glissières fixées sur les bords (17', 18') de l'ouverture coopérant avec les extrémités de l'axe de rotation (15).

10. Rangement selon l'une des revendications 7 à 9, **caractérisé en ce que** le bac de rangement (12) comprend des moyens de support et/ou de branchement (36) situés à proximité d'un bord de l'ouverture.

11. Rangement selon l'une des revendications 7 à 10, **caractérisé en ce que** le bac de rangement (12) présente des moyens de blocage dudit couvercle coopérant avec des moyens de blocage complémentaires du couvercle (14) et aptes à bloquer ce dernier dans une ou plusieurs positions.

12. Rangement selon la revendication 11, **caractérisé en ce que** le lesdits moyens de blocage sont aptes à maintenir le couvercle (14) dans une position fermée où il obture complètement l'ouverture (16) et/ou dans au moins une position partiellement fermée où il obture partiellement l'ouverture (16).

13. Rangement selon l'une des revendications 11 ou 12, **caractérisé en ce que** lesdits moyens de blocage sont aptes à maintenir le couvercle (14) dans une position sensiblement verticale.

14. Rangement selon l'une des revendications 11 à 13, **caractérisé en ce que** lesdits moyens de blocage sont des aimants.

15. Véhicule automobile comportant au moins un rangement selon l'une des revendications 7 à 14.
